# EUROPEAN PATENT SPECIFICATION

(11) **EP 0 391 728 B1**
(45) Date of publication and mention of the grant of the patent: **11.01.1995**
(21) Application number: 90303704.2
(22) Date of filing: 06.04.1990
(51) Int. Cl.: H04N 5/782, G11B 27/031

(54) **Magnetic tape helical recording and playback apparatus adapted for postrecording**
Gerät zur magnetischen Schrägspur-Bandaufzeichnung und -wiedergabe, angepasst für Nachaufzeichnung
Appareil d'enregistrement et de reproduction magnétique à balayage hélicoidal de la bande, adapté pour post-enregistrement

(30) Priority: 07.04.1989 JP 87000/89
(43) Date of publication of application: 10.10.1990
(73) Proprietor: VICTOR COMPANY OF JAPAN, LTD., Yokohama-Shi, Kanagawa-Ken (JP)
(72) Inventor: Morisaki, Kazuhiko, Yokohama-Shi, Kanagawa-Ken (JP); Hayami, Atsushi, Yokohama-shi Kanagawa-Ken (JP); Nakagawa, Hiroshi, Yokosuka-Shi, Kanagawa-Ken (JP)
(74) Representative: Dawson, Elizabeth Ann

(56) References cited:
- WO-A-87/00381
- DE-A- 3 306 254
- GB-A- 2 103 866
- GB-A- 2 167 889
- US-A- 4 507 688
- US-A- 4 761 693

## Description

The present invention relates to a rotary head type magnetic recording and playback apparatus such as a digital audio tape-recorder (DAT), and more particularly relates to an improvement in a rotary head type magnetic recording and playback apparatus adapted to implement an after recording (hereinafter referred to as a "postrecording") to a recorded magnetic tape.

There is generally known a helical scan type magnetic recording and playback apparatus called a DAT constituted to sequentially record pulse code modulated audio signals on a magnetic tape by means of a plurality of rotary magnetic heads.

With DAT, PCM signals obtained by applying pulse code modulation to information to be recorded are recorded on a tape conforming to an Industry Standard. After such PCM, signals are subjected to recording signal processing such as time compression, they are recorded while obliquely forming signal tracks on a magnetic tape by means of rotating two magnetic heads with no guard band being formed between tracks.

In the utilized two heads type DAT, the two heads in the recording are such that a head for A channel of plus (+) azimuth (A head) and a head for B channel of minus (-) azimuth (B head) are mounted or affixed and arranged on the rotary drum so as to form an angular interval of 180 degrees between each other. These heads are used in common for recording and playback. Each head gap width (hw) is 1.5 times the track pitch (Tp).

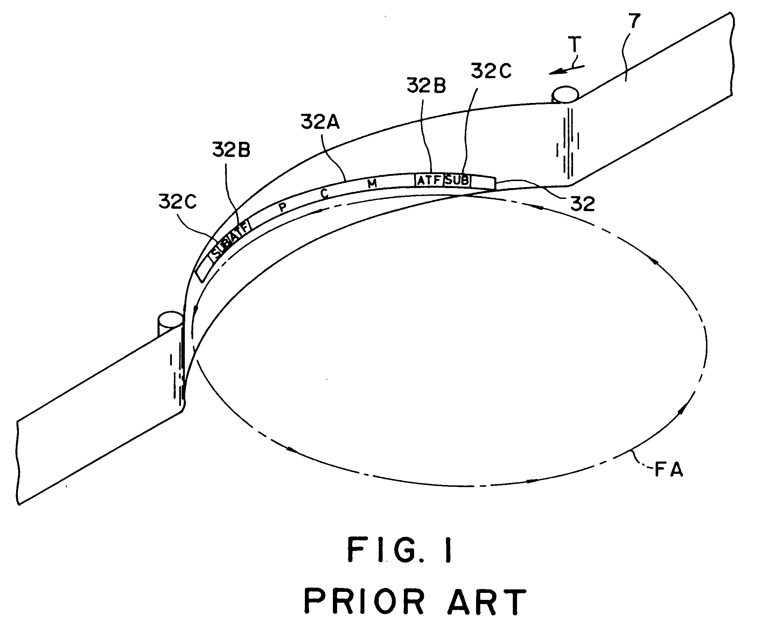

As shown in FIG. 1, the head for common use in recording and playback rotates in a direction indicated by an arrow FA with respect to the magnetic tape 7 transported in a direction indicated by an arrow T. Thus, recording of desired data is obliquely made on the magnetic tape 7. The signal format on the recorded track 32 is constituted as well known. This signal format includes a PCM area 32A where principally audio data is recorded, ATF (Auto Track Finding) areas 32B where signals for conducting a tracking servo are recorded, and sub code (SUB) areas 32C where time codes, etc. are recorded.

In such a DAT, postrecording is conducted as follows. Initially, ATF signals in the ATF areas 32B recorded on the tape 7 are reproduced or played back by the recording and playback common head. Thus, tracking is carried out on the basis of the reproduced signals.

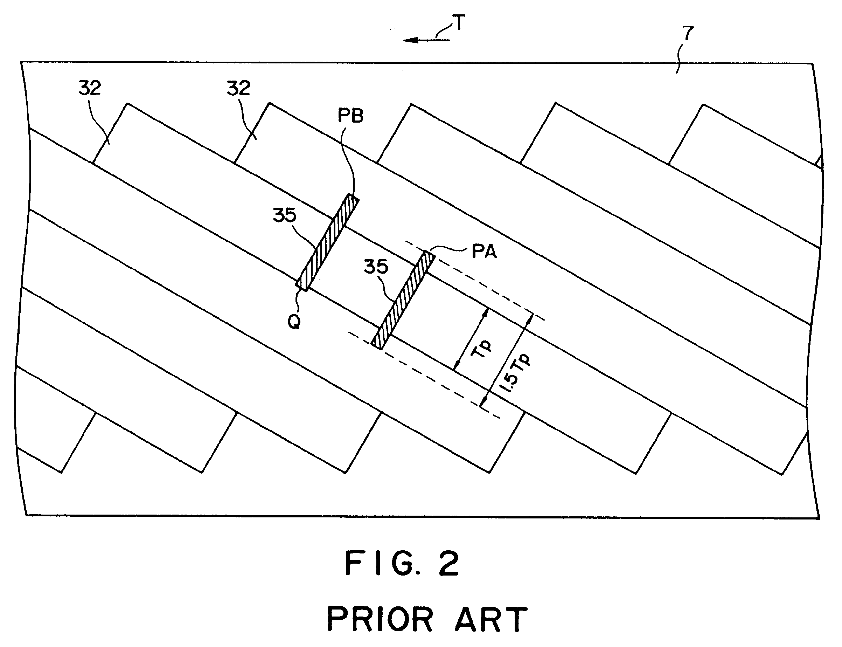

In the case of tracking at the time of ordinary playback, as indicated by the position PA in FIG. 2, the center of the head 35 traces the central portion of the track 32. At the time of postrecording, however, as indicated by the position PB in the figure so that the lower edge Q of the head 35 comes close to the boundary line of the track 32.

In the case of subcode postrecording, only when the head 35 scans the subcode areas 32C of the track 32, the head 35 is placed in a recording mode. Thus, a desired postrecording is conducted.

As stated above, since there is used a set of recording and playback common head for respective A and B channels each having a core width larger than the track width in the conventional DAT, it is necessary for performing a postrecording to conduct an offset tracking.

However, since tracking of the DAT is carried out by using pilot signals of ATF on tracks adjacent on both sides of a track subjected to tracking, it is necessary to allow the head to be positioned slightly on both adjacent tracks. Accordingly, as shown in FIG. 2, it is difficult to provide an offset such that the lower edge Q of the head 35 is positioned on the boundary line of the track.

For this reason, a track pattern after postrecording would be a pattern deviating somewhat from an original or normal pattern. For example, in the case of PCM postrecording, a deviation would occur within the PCM areas in the track, and in the case of SUB postrecording, a deviation would occur within the SUB areas in the track. Such a deviation in the pattern might cause disturbance of tracking at the time of playback, resulting in fluctuations in the playback signal level.

The present invention is made at the above viewpoint, and an object of the present invention is to provide a rotary head type magnetic recording and playback apparatus which is adapted to reduce the degree of deviation of the recording patterns before and after postrecording, thus making it possible to conduct the satisfactory playback of signals free from disturbance in tracking.

According to the present invention this is achieved by providing separate heads for recording which are spaced from the playback heads with respect to the head rotation axis, so that with the playback heads centred on the tracks, the recording heads trace the track boundaries.

Some spacing of separate recording and playback heads is necessary in any case with separate recording and playback heads to compensate for the advance of the tape. Thus, for example, US-A-4507688 discloses a two channel recording system having separate heads for postrecording only. The postrecording heads are just sufficiently spaced from the normal recording/playback heads in the axial direction of the drum on which they are mounted to allow for the movement of the tape in passing from the normal head to the postrecording head.

The present invention provides a rotary head type magnetic recording and playback apparatus for postrecording data on a tape bearing recorded data in the form of parallel tracks traversing the tape, the postrecording taking place only on areas defined by the pre-recorded tracks, the apparatus comprising separate recording head means and playback head means, for each of respective recording channels, arranged on a drum past which the tape is transported, the drum being rotatable about an axis which is inclined to the tape transport direction, the head means having a gap width broader than the width of a track on the recorded tape,
the apparatus being characterised in that the head means are arranged such that the playback head means of each channel (A,B) precedes the recording head means of the same channel by 90 degrees in the direction of rotation of the drum,
the tape feed is arranged such that postrecording and playback take place during different time intervals; and
the recording head means and the playback head means of each channel are spaced in the direction of the rotation axis of the drum so that with the centre of the playback head means tracing the centre of a pre-recorded track, the downstream edge of the recording head in the tape transport direction traces the boundary between tracks.

In accordance with the present invention, tracking of the playback heads is carried out in an ordinary manner even at the time of postrecording. Thus, each playback head traces the central portion of the track. However, tracking of the recording head at this time is carried out so that the edge of the head on the tape feeding side traces the boundary of the track.

For example, in the case of PCM postrecording, postrecording is implemented only to a PCM area of the track in accordance with a pattern larger than the track width. However, the track pattern becomes in correspondence with an ordinary pattern as before postrecording by the postrecording implemented to the next adjacent track.

As described above, in accordance with this invention, the magnetic head is divided into playback magnetic heads and recording magnetic heads to set the mounting positions on the drum of these heads so that the downstream side edges of the recording heads are positioned on the boundaries between tracks. Accordingly, the degree of diversity or disagreement between recording patterns before and after postrecording is reduced, thus making it possible to advantageously conduct a satisfactory playback of signals free from disturbance in tracking.

In the accompanying drawings:
FIG. 1 is an explanatory view showing a typical signal recording state by the rotary head;
FIG. 2 is an explanatory view showing the tracking state of a head in a conventional device;
FIG. 3 is a perspective and a plan view of the head drum according to an embodiment of this invention;
FIG. 4 is a circuit diagram showing a signal processing circuit for determining postrecording timing in the embodiment according to the present inventio;
FIG. 5 is a time chart showing the postrecording timings for a track pattern in the embodiment of this invention;
FIG. 6 is a time chart showing the operation of the signal processing circuit shown in FIG. 4; and
FIG. 7 is an explanatory view showing the tracking state of the head in the embodiment of this invention.

There will be described in detail preferred embodiments of a magnetic recording and playback apparatus according to the present invention in conjunction with the accompanying drawings.

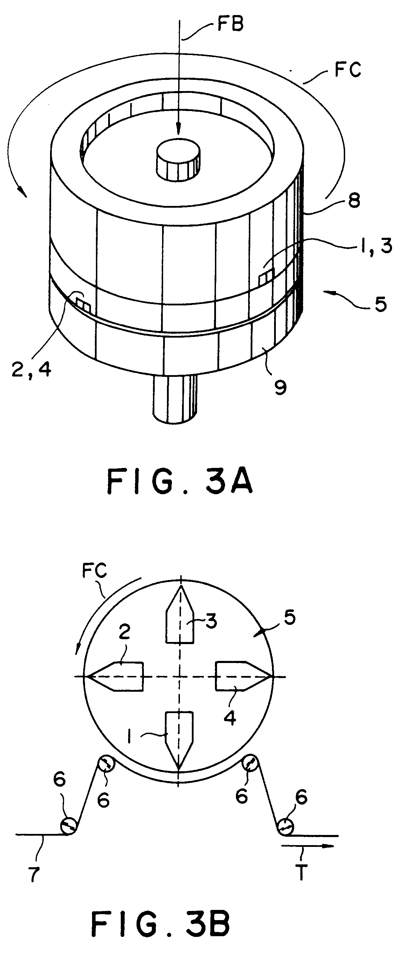

An embodiment of this invention is now described with reference to FIGS. 3 to 7. The same components as those in the aforementioned prior art, are designated by the same reference numerals, respectively. FIG. 3A is a perspective of the head drum, and FIG. 3B is a plan view which is viewed from an arrow FB (upper drum side) of FIG. 3B. In these figures, four heads are arranged at an angular interval of 90 degrees in a plane of rotation. In an order opposite to the rotational direction indicated by an arrow FC, an A channel recording head 1, a B channel playback head 2, a B channel recording head 3, and an A channel playback head 4 are arranged, respectively. The A channel recording head 1 has the same plus azimuth as the A channel playback head 4, and the B channel recording head 3 has the same minus azimuth as the B channel playback head 2. In the embodiment, each of the heads 1 through 4 has a gap width (track width) of 1.5 times the track pitch Tp.

As shown in FIG. 3A, the arrangement of respective heads with respect to the direction of the rotation axis of the upper drum 8 is such that the recording heads 1 and 3 and the playback heads 2 and 4 are arranged in manners different from each other. Namely, the playback heads 2 and 4 are arranged nearer to the lower drum 9 by (7/4)Tp than the recording heads 1 and 3. It is to be noted that Tp is a track width as aforementioned (see FIG. 2) wherein (7/4)Tp is 23.8um. A magnetic tape 7 is obliquely wrapped around the head drum 5 over approximately 90 degrees, and transported in a direction indicated by an arrow T.

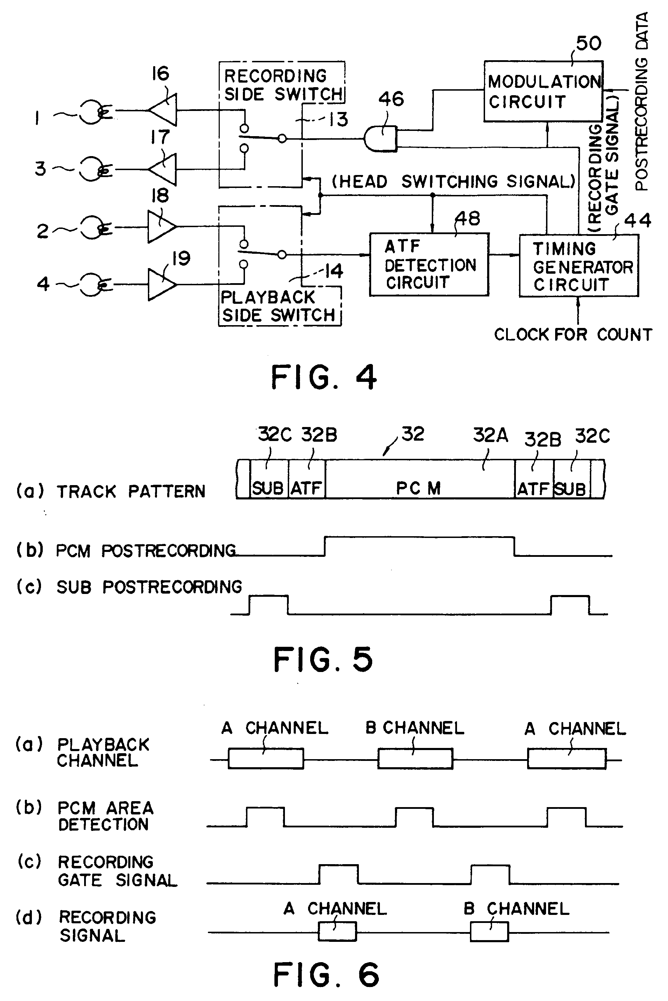

The signal processing circuit in this embodiment will now be described with reference to FIG. 4. In the figure, recording amplifiers 16 and 17 are connected to the recording signal input sides of the heads 1 and 3, respectively. Furthermore, playback amplifiers 18 and 19 are connected to the playback signal output sides of the playback heads 2 and 4, respectively.

The signal input sides of the recording amplifiers 16 and 17 are both connected to the switching terminal side of the switch 13. The signal output sides of the playback amplifiers 18 and 19 are both connected to the switching terminal side of the switch 14. Switching of the these switches 13 and 14 is carried out on the basis of a head switching signal outputted from a timing generator circuit 44. The signal input side of the switch 13 is connected to the signal output side of an AND gate 46. Furthermore, the signal output side of the switch 14 is connected to the input side of the timing generator circuit 44 through an ATF detection circuit 48.

A recording gate signal outputted from the timing generator circuit 44, is inputted to the aforementioned AND gate 46 together with an output from a modulation circuit 50. It is noted that the recording gate signal is inputted to the modulation circuit 50 together with postrecording data. Furthermore, a suitable clock for count is inputted from an external to the timing generator circuit 44.

The recording gate signal of the aforementioned signals is a signal as shown in FIGS. 5(b) and 5(c) with respect to a pattern of the track 32 shown in FIG. 5(a). This signal is generated by the timing generator circuit 44 using, as a reference, a sync signal of an ATF area 32B detected by the ATF detection circuit 48. The recording gate signal shown in FIG. 5(b) is a signal used in the case of the postrecording of the PCM area 32A in the track pattern. Furthermore, the recording gate signal shown in FIG. 5(c) is a signal used in the case of the postrecording of the SUB areas 32C, which signal serves to discriminate the subcode areas 32C in the track pattern.

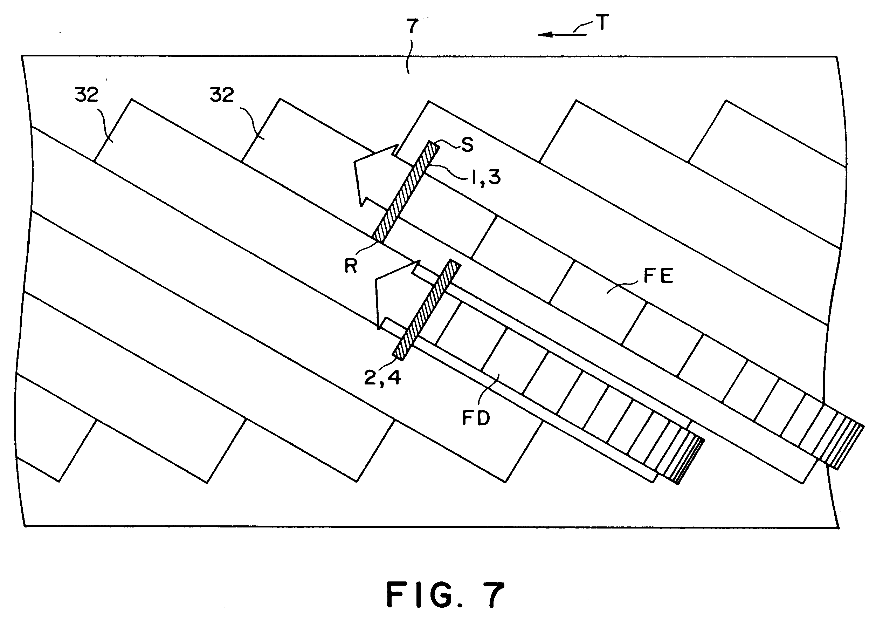

The operation at the time of the PCM postrecording of the above-mentioned embodiment will now be described with reference to FIGS. 6 and 7. In this case, playback operations of respective A and B channels are alternately carried out (see FIG. 6(a)). At this time, tracking of the playback heads 2 and 4 is conducted in an ordinary manner. Namely, as shown in FIG. 7, this tracking is conducted in a manner that centers of the playback heads 2 and 4 trace the central portions of the track 32 (in a direction indicated by an arrow FD).

A sync signal of the ATF area 32B is detected from a playback signal which is an output from the switch 14 by the ATF detection circuit 48. Thus, a signal for discriminating the PCM area as shown in FIG. 6(b) is generated on the basis of the sync signal. At the timing generator circuit 44, a recording gate signal indicating a postrecording in the PCM postrecording timing shown in FIG. 5(b) is generated on the basis of the discrimination signal (see FIG. 6(c)).

When this recording gate signal is inputted to the modulation circuit 50, a recording signal for a postrecording corresponding to the PCM area 32A in the above mentioned playback signal is modulated. The recording signal thus modulated is outputted to the AND gate 46. At the AND gate 46, an output of the recording signal inputted thereto is provided at a timing of the recording gate signal. This recording signal is inputted to the switch 13.

At the switch 13, switching is conducted on the basis of a control signal from the timing generator circuit 44. Thus, the recording signal is alternately delivered to the recording heads 1 and 3 at a timing shown in FIG. 6(d).

As shown in FIG. 7, the centers of the playback heads 2 and 4 trace the central portions of the tracks. This is because tracking is carried out by using a pilot signal of ATF areas from the adjacent tracks. However, as shown in FIG. 3A, the recording heads 1 and 3 and the playback heads 2 and 4 are arranged in a manner that there is a difference of (7/4) Tp in height between the former heads and the latter heads. For this reason, as shown in FIG. 7, each tape feed side edge (which is on the downstream side of the tape transport) or each lower edge R of these recording heads 1 and 3, and each upper edge S thereof trace the boundary portion between tracks and central portion of the adjacent track, respectively (see the arrow FE). Such a tracking by the recording heads 1 and 3 is repeatedly carried out as long as the centers of the playback heads 2 and 4 trace the central portions of the tracks in an ordinary manner.

Namely, postrecording is implemented to a track having a width of 1.5 times as large as an ordinary track width Tp by the recording heads 1 and 3. However, since over-write corresponding to 0.5 Tp is carried out by the postrecording applied to the next track, postrecording to a track having an ordinary width is eventually carried out. It is to be noted that, also in the case of the SUB postrecording, while the postrecording, timing only varies as shown in FIG. 5(c), other operations are the same as in the above-mentioned operation.

In accordance with the aforementioned embodiment, there occurs no deviation or diversity in a width direction of the track between a recording track pattern before postrecording and a recording track pattern after postrecording. Namely, the recording pattern after postrecording becomes identical to an ordinary recording pattern. Accordingly, even if there occur fluctuations of the playback head due to disturbances in the tracking at the time of playback after postrecording a satisfactory reproduced or played back signal can be provided. Furthermore, since a circuit for conducting an offset tracking is unnecessary, the circuit arrangement can be simplified.

It is to be noted that it is extremely easy to make design changes of the circuit arrangement shown in FIG. 4 so that the same effects as above are attained. In addition, this invention may be also applied to magnetic recording and playback apparatus of other rotary head types.

## Claims

1. A rotary head type magnetic recording and playback apparatus for postrecording data on a tape (7) bearing recorded data in the form of parallel tracks traversing the tape (7), the postrecording taking place only on areas defined by the pre-recorded tracks (32), the apparatus comprising separate recording head means (1,3) and associated playback head means (2,4), for each of respective recording channels (A,B), arranged on a drum (5) past which the tape is transported, the drum being rotatable about an axis which is inclined to the tape transport direction, the head means having a gap width broader than the width (Tp) of a track on the recorded tape,
the apparatus being characterised in that the head means are arranged such that the playback head means (2,4) of each channel (A,B) precedes the recording head means of the same channel by 90 degrees in the direction of rotation of the drum,
the tape feed is arranged such that postrecording and playback take place during different time intervals; and
the recording head means and the playback head means of each channel are spaced in the direction of the rotation axis of the drum so that with the centre of the playback head means tracing the centre of a pre-recorded track, the downstream edge of the recording head in the tape transport direction traces the boundary between tracks.

2. A rotary head type magnetic and playback apparatus as set forth in claim 1, wherein said recording head means comprises a respective recording head (1,3) for each of first and second channels (A,B) provided at positions angularly spaced from each other by 180 degrees, and having azimuth angles different from each other,
wherein said playback head means comprises two playback heads (2,4) for first and second channels (A,B) respectively provided at positions angularly spaced to each other by 180 degrees, and having azimuth angles different from each other, and
wherein said first channel recording head (1), said second channel playback head (2), said second channel recording head (3), and said first channel playback head (4) are arranged in the cited order along the outer peripheral surface of the rotary drum (5) with respect to the direction opposite to the rotating direction, and the angular interval between two adjacent heads among the first channel recording and playback heads (1,4) and second channel recording and playback heads (2,3) is substantially 90 degrees.

3. A rotary head type magnetic and playback apparatus as set forth in claim 2, comprising
first and second recording amplifiers (16,17) respectively connected to said first and second recording heads (1,3),
first and second playback amplifiers (18,19) respectively connected to said first and second playback heads (2,4),
first and second switching circuits (13,14) changing over between said first and second recording heads (1,3) and said first and second playback heads (2,4), respectively,
a timing generator circuit (44) for outputting a recording gate signal to said first and second switching circuits (13,14),
an ATF detection circuit (48) for detecting an auto track finding area recorded on a track and outputting a signal which discriminates a pulse code modulation area recorded on a track, on the basis of a synchronization signal as a reference, and
a modulation circuit (50) to which a recording gate (46) signal and postrecording data are input, for outputting a modulation signal to said first switching circuit (13) for said recording heads (1,3).

4. A rotary head type magnetic recording and playback apparatus for postrecording data on a tape (7) bearing recorded data in the form of parallel tracks traversing the tape (7), the postrecording taking place only on areas defined by the pre-recorded tracks (32), the apparatus comprising separate recording head means (1,3) and associated playback head means (2,4) for each of respective recording channels (A,B) arranged on a drum (5) past which the tape is transported, the drum being rotatable about an axis which is inclined to the tape transport direction, the head means having a gap width broader than the width (Tp) of a track of the recorded tape,
said recorded magnetic tape having recorded on a track thereof at least one auto track finding (ATF) area having a portion containing synchronization signals and a pulse code modulation area;
the apparatus being characterised by:
said head means being mounted on said drum at an angular interval 90 degrees relative to each other so that said playback head means (2,4) precede said recording head means (1,3) in the rotational direction of said drum in a plane of rotation thereof;
said head means being mounted offset relative to each other in the direction of the rotational axis of said drum so that the downstream side edge in the tape transport direction of said recording head means (1,3) traces the boundary between adjacent tracks and the center of said playback head means (2,4) traces the center of one of said adjacent tracks;
pulley means for guiding said magnetic tape around substantially 90 degrees of the circumference of said rotary drum so that said playback head means and said recording head means alternatingly perform playback and postrecording, respectively;
said recording head means (1,3) for first and second channels being provided at positions angularly spaced relative to each other by 180 degrees, respectively, and having azimuth angles different from each other;
said playback head means (2,4) for said first and second channels provided at positions angularly spaced relative to each other by 180 degrees, respectively, and having azimuth angles different from each other;
said first channel recording head (1), said second channel playback head (2), said second channel recording head (3) and said first channel playback head (4) being arranged in the cited order along the outer peripheral surface of said drum (5) in a direction opposite to said rotational direction thereof and at angular intervals of substantially 90 degrees;
first and second recording amplifiers (16, 17) having respective outputs respectively connected to said first and second recording heads (1,3);
first and second playback amplifiers (18,19) having respective inputs respectively connected to said first and second playback heads (2,4);
first and second switching circuits (13,14) for selectively switching between said first and second recording amplifiers (16,17) and said first and second playback amplifiers (18,19) respectively;
an auto track finding (AFT) detection circuit (48) having an input connected to the outputs of said playback amplifiers through said second switching circuit for detecting said ATF signal and outputting a discrimination signal which discriminates a pulse code modulation area, on the basis of a synchronization signal of an output signal of said second switching circuit;
a timing generator circuit (44) having an input connected to an output of said ATF detection circuit for outputting a recording gate signal to said first and second switching circuits in response to said discrimination signal;
a modulation circuit having an input connected to an output of said timing generator circuit for receiving said recording gate signal and a further input for postrecording data and an output for outputting a modulation signal to said inputs of said recording amplifiers through said first switching circuit.

## Patentansprüche

1. Magnetisches Aufzeichnungs- und Wiedergabegerät mit rotierenden Köpfen zur Nachaufzeichnung von Daten auf einem Band (7), das aufgezeichnete Daten trägt, in Form paralleler Spuren, die das Band (7) queren, wobei die Nachaufzeichnung nur auf durch voraufgezeichnete Spuren (32) definierten Bereichen stattfindet, wobei das Gerät eine separate Aufzeichnungskopfeinrichtung (1, 3) und zugeordnete Wiedergabekopfeinrichtungen (2, 4) für jeden von Aufzeichnungskanälen (A, B) angeordnet auf einer Trommel (5) aufweist, an der das Band vorbei transportiert wird, wobei die Trommel um eine Achse drehbar ist, die bezüglich der Bandtransportrichtung geneigt ist, die Kopfeinrichtungen eine Spaltbreite aufweisen, die breiter als die Breite (Tp) einer Spur auf dem aufgezeichneten Band ist, aufweisen, wobei das Gerät dadurch gekennzeichnet ist, daß
die Kopfeinrichtungen so angeordnet sind, daß die Wiedergabekopfeinrichtung (2, 4) jedes Kanals (A, B) der Aufzeichnungskopfeinrichtung desselben Kanals um 90° in der Drehrichtung der Trommel vorausgeht,
die Bandzufuhr derart ist, daß die Nachaufzeichnung und Wiedergabe während unterschiedlicher Zeitintervalle stattfinden; und
die Aufzeichnungskopfeinrichtung und die Wiedergabekopfeinrichtung jedes Kanals in der Richtung der Drehachse der Trommel derart beabstandet sind, daß bei dem Zentrum einer voraufgezeichneten Spur spurmäßig nachgehendem Zentrum der Wiedergabekopfeinrichtung die stromabwärtige Kante des Aufzeichnungskopfes in der Bandtransportrichtung der Grenze zwischen Spuren spurmäßig nachgeht.

2. Magnetisches Aufzeichnungs- und Wiedergabegerät mit rotierenden Köpfen nach Anspruch 1, in welchem die Aufzeichnungskopfeinrichtung einen jeweiligen Aufzeichnungskopf (1, 3) für jeden eines ersten und zweiten Kanals (A, B) an Positionen aufweist, die bezüglich einander einen Winkelabstand von 180° aufweisen, und wobei die Köpfe voneinander verschiedene Azimutwinkel aufweisen,
in welchem die Wiedergabekopfeinrichtung zwei Wiedergabeköpfe (2, 4) für den ersten und zweiten Kanal (A, B) jeweils an Positionen, die winkelmäßig voneinander um 180° beabstandet sind, aufweist, und die beiden Köpfe voneinander verschiedene Azimutwinkel aufweisen, und
in welchem der Aufzeichnungskopf (1) für den ersten Kanal, der Wiedergabekopf (2) für den zweiten Kanal der Aufzeichnungskopf (3) für den zweiten Kanal und der Wiedergabekopf (4) für den ersten Kanal in der dargelegten Reihenfolge längs der äußeren Umfangsfläche der Rotationstrommel (5) bezüglich der Richtung entgegengesetzt zur Rotationsrichtung angeordnet sind und der Winkelabstand zwischen zwei aneinandergrenzenden Köpfen unter den Aufzeichnungs- und Wiedergabeköpfen (1, 4) für den ersten Kanal und Aufzeichnungs- und Wiedergabeköpfen (2, 3) für den zweiten Kanal im wesentlichen 90° beträgt.

3. Magnetisches Aufzeichnungs- und Wiedergabegerät mit rotierenden Köpfen nach Anspruch 2, aufweisend
einen ersten und zweiten Aufzeichnungsverstärker (16, 17), die jeweils mit dem ersten bzw. zweiten Aufzeichnungskopf (1, 3) verbunden sind,
einen ersten und zweiten Wiedergabeverstärker (18, 19), die jeweils mit dem ersten bzw. zweiten Wiedergabekopf (2, 4) verbunden sind,
eine erste und zweite Schaltstufe (13, 14), die jeweils zwischen dem ersten und zweiten Aufzeichnungskopf (1, 3) bzw. dem ersten und zweiten Wiedergabekopf (2, 4) hin- und hergeschaltet werden,
eine Zeitgabe-Generatorschaltung (44), die ein Aufzeichnungssteuersignal an die erste und zweite Schaltstufe (13, 14) ausgibt,
eine ATF-Detektorschaltung (48) zur Detektion eines automatischen Spurauffindungsbereichs, der auf einer Spur aufgezeichnet ist, und zur Ausgabe eines einen Pulscodemodulationsbereich, der auf einer Spur aufgezeichnet ist, auf der Grundlage eines Synchronisationssignals unterscheidenden Signals als einen Bezug, und
eine Modulationsschaltung (50), der ein Aufzeichnungssteuer (46)-Signal und Nachaufzeichnungsdaten zugeführt werden und die ein Modulationssignal an die erste Schaltstufe (13) für die Aufzeichnungsköpfe (1, 3) ausgibt.

4. Magnetisches Aufzeichnungs- und Wiedergabegerät mit rotierenden Köpfen zur Nachaufzeichnung von Daten auf einem Band (7), das aufgezeichnete Daten trägt, in Form paralleler Spuren, die das Band (7) queren, wobei die Nachaufzeichnung nur auf durch voraufgezeichnete Spuren (32) definierten Bereichen stattfindet, wobei das Gerät eine separate Aufzeichnungskopfeinrichtung (1, 3) und zugeordnete Wiedergabekopfeinrichtungen (2, 4) für jeden von Aufzeichnungskanälen (A, B) angeordnet auf einer Trommel (5) aufweist, an der das Band vorbei transportiert wird, wobei die Trommel um eine Achse drehbar ist, die bezüglich der Bandtransportrichtung geneigt ist, die Kopfeinrichtungen eine Spaltbreite aufweisen, die breiter als die Breite (Tp) einer Spur auf dem aufgezeichneten Band ist, aufweisen, wobei auf dem aufgezeichneten Magnetband auf einer Spur des Bandes zumindest ein automatischer Spurauffindungs (ATF)-Bereich, der einen Synchronisationssignale enthaltenden Abschnitt aufweist, und ein Pulscodemodulationsbereich aufgezeichnet sind;
wobei das Gerät dadurch gekennzeichnet ist:
daß die Kopfeinrichtungen auf der Trommel unter einem Winkelabstand von 90° relativ zueinander so angeordnet sind, daß die Wiedergabekopfeinrichtungen (2, 4) in der Rotationsrichtung der Trommel in einer Rotationsebene hiervon den Aufzeichnungskopfeinrichtungen (1, 3) vorausgehen;
daß die Kopfeinrichtungen relativ zueinander in der Richtung der Rotationsachse der Trommel derart versetzt sind, daß die stromabwärtige Seitenkante in der Bandtransportrichtung von den Aufzeichnungskopfeinrichtungen (1, 3) der Grenze zwischen aneinandergrenzenden Spuren spurmäßig nachgeht und das Zentrum der Wiedergabekopfeinrichtungen (2, 4) dem Zentrum einer der angrenzenden Spuren spurmäßig nachgeht;
daß das Gerät eine Rolleneinrichtung aufweist, die das Magnetband über im wesentlichen 90° der Umfargsfläche der Rotationstrommel derart führt, daß die Wiedergabekopfeinrichtungen und die Aufzeichnungskopfeinrichtungen die Wiedergabe und Nachaufzeichnung jeweils alternierend durchführen;
daß die Aufzeichnungskopfeinrichtungen (1, 3) für den ersten und zweiten Kanal an Positionen vorgesehen sind, die voneinander um 180° winkelmäßig beabstandet sind, und die Kopfeinrichtungen voneinander unterschiedliche Azimutwinkel aufweisen;
daß die Wiedergabekopfeinrichtungen (2, 4) für den ersten und zweiten Kanal an Positionen vorgesehen sind, die winkelmäßig bezüglich einander um 180° beabstandet sind, und die Kopfeinrichtungen voneinander verschiedene Azimuthwinkel aufweisen;
daß der Aufzeichnungskopf (1) für den ersten Kanal, der Wiedergabekopf (2) für den zweiten Kanal, der Aufzeichnungskopf (3) für den zweiten Kanal und der Wiedergabekopf (4) für den ersten Kanal in der dargelegten Reihenfolge längs der äußeren Umfangsfläche der Trommel (5) in einer Richtung entgegengesetzt zur Rotationsrichtung von dieser und unter Winkelabständen von im wesentlichen 90° angeordnet sind;
daß das Gerät einen ersten und zweiten Aufzeichnungsverstärker (16, 17) aufweist, deren jeweiliger Ausgang mit dem ersten bzw. zweiten Aufzeichnungskopf (1, 3) verbunden ist;
daß das Gerät einen ersten und zweiten Wiedergabeverstärker (18, 19) aufweist, deren jeweiliger Eingang mit dem ersten bzw. zweiten Wiedergabekopf (2, 4) verbunden ist;
daß das Gerät eine erste und zweite Schatstufe (13, 14) zur jeweiligen Umschaltung zwischen dem ersten und zweiten Aufzeichnungsverstärker (16, 17) bzw. dem ersten und zweiten Wiedergabeverstärker (18, 19) aufweist;
daß das Gerät eine ATF-Detektorschaltung (48) für eine automatische Spurauffindung aufweist mit einem Eingang, der mit den Ausgängen der Wiedergabeverstärker über die zweite Schaltstufe verbunden ist, zur Detektion des ATF-Signals und zur Ausgabe eines Diskriminatorsignals, das einen Pulscodemodulationsbereich auf der Grundlage eines Synchronisationssignals eines Ausgangssignals der zweiten Schaltstufe unterscheidet;
eine Zeitgabe-Generatorschaltung (44) mit einem Eingang, der mit einem Ausgang der ATF-Detektorschaltung verbunden ist, zur Ausgabe eines Aufzeichnungssteuersignals an die erste und zweite Schaltstufe in Abhängigkeit vom Diskriminatorsignal;
daß das Gerät eine Modulationsschaltung aufweist, mit einem Eingang, der mit einem Ausgang der Zeitgabegeneratorschaltung verbunden ist zum Empfang des Aufzeichnungssteuersignals und mit einem weiteren Eingang für Nachaufzeichnungsdaten und einem Ausgang zur Ausgabe eines Modulationssignals an die Eingänge der Aufzeichnungsverstärker über die erste Schaltstufe.

## Revendications

1. Appareil d'enregistrement et de lecture magnétique du type à têtes tournantes permettant de post-enregistrer des données sur une bande (7) porteuse de données enregistrées sous la forme de pistes parallèles traversant la bande (7), le post-enregistrement étant effectué seulement sur des zones définies par les pistes pré-enregistrées (32), l'appareil comprenant des moyens formant têtes d'enregistrement séparés (1, 3) et des moyens formant têtes de lecture associés (2, 4) pour chacun de canaux d'enregistrement respectifs (A, B) agencés sur un tambour (5) sur lequel la bande est défilée, le tambour pouvant être mis en rotation autour d'un axe qui est incliné par rapport à la direction de défilement de la bande, les moyens de têtes présentant une largeur d'entrefer supérieure à la largeur (Tp) d'une piste sur la bande enregistrée,
l'appareil étant caractérisé en ce que les moyens de têtes sont agencés de telle sorte que les moyens formant têtes de lecture (2, 4) de chaque canal (A, B) précèdent les moyens de têtes d'enregistrement du même canal de 90° suivant le sens de rotation du tambour;
l'alimentation de bande est agencée de telle sorte que le post-enregistrement et que la lecture s'effectuent pendant des intervalles temporels différents; et
les moyens formant têtes d'enregistrement et les moyens formant têtes de lecture de chaque canal sont espacés suivant la direction de l'axe de rotation du tambour de telle sorte que du fait que le centre des moyens de têtes de lecture suit le centre d'une piste pré-enregistrée, le bord aval de la tête d'enregistrement suivant la direction de défilement de bande suive la frontière entre des pistes.

2. Appareil d'enregistrement et de lecture magnétique du type à têtes tournantes selon la revendication 1, dans lequel lesdits moyens de têtes d'enregistrement comprennent des têtes d'enregistrement respectives (1, 3) à raison d'une pour chacun des premier et second canaux (A, B) prévues en des positions angulairement espacées l'une de l'autre de 180° et présentant des angles d'azimut différents l'un de l'autre,
dans lequel lesdits moyens de têtes de lecture comprennent deux têtes de lecture (2, 4) pour les premier et second canaux (A, B) respectivement prévues en des positions espacées angulairement l'une de l'autre de 180° et présentant des angles d'azimut différents l'un de l'autre ; et
dans lequel ladite première tête d'enregistrement de canal (1), ladite seconde tête de lecture de canal (2), ladite seconde tête d'enregistrement de canal (3) et ladite première tête de lecture de canal (4) sont agencées selon l'ordre cité le long de la surface périphérique externe du tambour tournant (5) par rapport au sens opposé au sens de rotation et l'intervalle angulaire entre deux têtes adjacentes prises parmi les premières têtes d'enregistrement et de lecture de canal (1, 4) et les secondes têtes d'enregistrement et de lecture de canal (2, 3) est sensiblement de 90°.

3. Appareil d'enregistrement et de lecture magnétique du type à tête tournante selon la revendication 2, comprenant :
des premier et second amplificateurs d'enregistrement (16, 17) respectivement connectés auxdites première et seconde têtes d'enregistrement (1, 3) ;
des premier et second amplificateurs de lecture (18, 19) respectivement connectés auxdites première et seconde têtes de lecture (2, 4) ;
des premier et second circuits de commutation (13, 14) qui réalisent respectivement une commutation entre lesdites première et seconde têtes d'enregistrement (1, 3) et lesdites première et seconde têtes de lecture (2, 4) ;
un circuit de générateur de cadencement (44) pour émettre en sortie un signal de porte d'enregistrement pour lesdits premier et second circuits de commutation (13, 14) ;
un circuit de détection ATF (48) pour détecter une zone de recherche de piste automatique enregistrée sur une piste et pour émettre en sortie un signal qui discrimine la zone de modulation par impulsions codées enregistrée sur une piste, sur la base d'un signal de synchronisation en tant que référence ; et
un circuit de modulation (50) sur lequel un signal de porte d'enregistrement (46) et des données de post-enregistrement sont entrés, pour émettre en sortie un signal de modulation sur ledit premier circuit de commutation (13) pour lesdites têtes d'enregistrement (1, 3).

4. Appareil d'enregistrement et de lecture magnétique du type à têtes tournantes permettant de post-enregistrer des données sur une bande (7) porteuse de données enregistrées sous la forme de pistes parallèles traversant la bande (7), le post-enregistrement étant effectué seulement sur des zones définies par les pistes pré-enregistrées (32), l'appareil comprenant des moyens formant têtes d'enregistrement séparés (1, 3) et des moyens formant têtes de lecture associés (2, 4) pour chacun de canaux d'enregistrement respectifs (A, B) agencés sur un tambour (5) au-delà duquel la bande est défilée, le tambour pouvant être mis en rotation autour d'un axe qui est incliné par rapport à la direction de défilement de la bande, les moyens formant têtes présentant une largeur d'entrefer supérieure à la largeur (Tp) d'une piste sur la bande enregistrée,
ladite bande magnétique enregistrée comportant enregistrée sur l'une de ses pistes au moins une zone de recherche de piste automatique (ATF) comportant une partie contenant des signaux de synchronisation et une zone de modulation par impulsions codées,
l'appareil étant caractérisé en ce que :
lesdits moyens de têtes sont montés sur ledit tambour selon un intervalle angulaire de 90° l'un par rapport à l'autre de telle sorte que lesdits moyens formant têtes de lecture (2, 4) précèdent lesdits moyens formant têtes d'enregistrement (1, 3) suivant le sens de rotation dudit tambour dans un plan de rotation de celui-ci ;
lesdits moyens formant têtes étant montés de manière à être décalés les uns par rapport aux autres suivant le sens de l'axe de rotation dudit tambour de telle sorte que le bord latéral aval desdits moyens formant têtes d'enregistrement (1, 3) suive la frontière entre des pistes adjacentes et que le centre desdits moyens formant têtes de lecture (2, 4) suive le centre de l'une desdits pistes adjacentes ;
un moyen de poulie pour guider ladite bande magnétique sensiblement sur 90° de la circonférence dudit tambour tournant de telle sorte que lesdits moyens de têtes de lecture et que lesdits moyens formant têtes d'enregistrement réalisent en alternance respectivement une lecture et un post-enregistrement ;
lesdits moyens formant têtes d'enregistrement (1, 3) pour des premier et second canaux étant respectivement prévus en des positions espacées respectivement l'une de l'autre de 180° et présentant des angles d'azimut différents l'un de l'autre ;
lesdits moyens de têtes de lecture (2, 4) pour lesdits premier et second- canaux étant prévus en des positions espacées respectivement angulairement l'une de l'autre de 180° et présentant des angles d'azimut différents l'un de l'autre ;
ladite première tête d'enregistrement de canal (1), ladite seconde tête de lecture de canal (2), ladite seconde tête d'enregistrement de canal (3) et ladite première tête de lecture de canal (4) étant agencées selon l'ordre cité le long de la surface périphérique externe dudit tambour (5) suivant un sens opposé à son dit sens de rotation selon des intervalles angulaires de sensiblement 90° ;
des premier et second amplificateurs d'enregistrement (16, 17) comportant des sorties respectives respectivement connectées auxdites première et seconde têtes d'enregistrement (1, 3) ; des premier et second amplificateurs de lecture (18, 19) comportant des entrées respectives respectivement connectées auxdites première et seconde têtes de lecture (2, 4) ;
des premier et second circuits de commutation (13, 14) pour réaliser sélectivement une commutation respectivement entre lesdits premier et second amplificateurs d'enregistrement (16, 17) et lesdits premier et second amplificateurs de lecture (18, 19) ;
un circuit de détection de recherche de piste automatique (ATF) (48) comportant une entrée connectée sur les sorties desdits amplificateurs de lecture par l'intermédiaire dudit second circuit de commutation pour détecter ledit signal ATF et pour émettre en sortie un signal de discrimination qui discrimine une zone de modulation par impulsions codées, sur la base d'un signal de synchronisation d'un signal de sortie dudit second circuit de commutation ;
un circuit de générateur de cadencement (44) comportant une entrée connectée à une sortie dudit circuit de détection ATF pour émettre en sortie un signal de porte d'enregistrement sur lesdits premier et second circuits de commutation en réponse audit signal de discrimination ; et
un circuit de modulation comportant une entrée connectée sur une sortie dudit circuit de générateur de cadencement pour recevoir ledit signal de porte d'enregistrement et une autre entrée pour post-enregistrer des données et une sortie pour émettre en sortie un signal de modulation sur lesdites entrées desdits amplificateurs d'enregistrement par l'intermédiaire dudit premier circuit de commutation.
